# EUROPEAN PATENT APPLICATION

(11) **EP 3 816 016 A1**
(43) Date of publication of application: **05.05.2021**
(21) Application number: 20204835.1
(22) Date of filing: 30.10.2020
(51) Int. Cl.: B62D 3/12, F16H 55/28

(54) **RACK BIASING DEVICE**

(30) Priority: 01.11.2019 JP 2019199608
(71) Applicant: JTEKT CORPORATION, Chuo-ku, Osaka-shi, Osaka 542-8502 (JP)
(72) Inventor: NOGUCHI, Hirotaka, Osaka-shi, Osaka 542-8502 (JP)
(74) Representative: Winter, Brandl - Partnerschaft mbB

(57) **Abstract**

A rack biasing device (180) includes a rack guide (183) configured to guide movement of a rack shaft (130), a cylindrical guide member (189) attached to a rack housing (131), an annular first sealing member (181) configured to provide a seal between the guide member (189) and the rack guide (183), a biasing member (184) disposed on one side of the rack guide (183) opposite to the rack shaft (130), an engaging member (185) configured to cause the biasing member (184) to generate biasing force to push the rack shaft (130) toward a pinion shaft (160), and a second sealing member (182) configured to provide a seal between the guide member (189) and the rack guide (183), and abut against the engaging member (185). The rack guide (183) has an annular distributing portion (187) in an end portion that faces the engaging member (185).

## Description

### BACKGROUND OF THE INVENTION

### 1. Field of the Invention

The invention relates to a rack biasing device that presses a rack shaft against a pinion shaft.

### 2. Description of Related Art

In some cases, a rack shaft is pressed against a pinion shaft by means of a biasing member, such as a spring, so that the rack shaft and the pinion shaft appropriately mesh with each other. For example, a rack biasing device described in Japanese Unexamined Patent Application Publication No. 2017-013648 (JP 2017-013648 A) includes a rack guide for pressing the rack shaft straight against the pinion shaft.

When a mechanism is provided for pressing the rack shaft against the pinion shaft, it is necessary to provide a through-hole in a circumferential wall of a rack housing that houses the rack shaft and the pinion shaft, and place a rack guide inserted into the through-hole. Thus, the rack biasing device is provided with a sealing mechanism that prevents water, etc. from entering the interior of the housing via the through-hole. In the rack biasing device described in JP 2017-013648 A, O-ring grooves are provided in both the rack guide and a member that blocks the through-hole, and the through-hole is sealed with O-rings fitted in the O-ring grooves.

The rack biasing device described in JP 2017-013648 A is also provided with a member for achieving alignment or centering of the rack guide, and preventing rattle caused by collision of the member that blocks the through-hole, with the rack guide, aside from sealing of the through-hole.

### SUMMARY OF THE INVENTION

However, when the O-ring grooves are provided in two or more members in order to achieve sealing of the through-hole, the lengths of the respective members are increased, resulting in increase in the length of the through-hole that receives these members. Since the through-hole is provided in a direction perpendicular to the axis of the rack shaft, the size of the entire housing including the through-hole is increased. Thus, through intensive studies and experiments, the inventor finally found out a structure that can curb generation of rattle, while ensuring the ability to seal the through-hole.

This invention provides a rack biasing device that seals a through-hole and curbs generation of rattle, while holding down the size of a housing as a whole.

A rack biasing device according to one aspect of the invention is mounted on a gear mechanism including a pinion shaft at least a part of which comprises a pinion, a rack shaft at least a part of which comprises a rack that meshes with the pinion, and a rack housing in which the rack shaft is housed. The rack biasing device is operable to generate biasing force that presses the rack shaft against the pinion shaft. The rack biasing device includes a rack guide configured to move along a movement axis that intersects a rack axis as a direction of movement of the rack shaft, and guide movement of the rack shaft, a cylindrical guide member attached to the rack housing, and configured to house the rack guide and guide movement of the rack guide, an annular first sealing member configured to generate first biasing force between the guide member and the rack guide, and provide a seal between the guide member and the rack guide, a biasing member that is housed in the guide member, and is disposed on one side of the rack guide opposite to the rack shaft, an engaging member disposed on one side of the rack guide opposite to the rack shaft, and configured to engage with the guide member to cause the biasing member to generate biasing force to push the rack shaft toward the pinion shaft, and a second sealing member disposed to be closer to the engaging member than the first sealing member, and configured to provide a seal between the guide member and the rack guide, and abut against the engaging member. The rack guide has an annular distributing portion in an end portion that faces the engaging member, and the distributing portion is configured to cause the second sealing member to generate second biasing force between the guide member and the rack guide, and generate third biasing force different from the second biasing force, between the engaging member and the rack guide.

With the above arrangement, the second biasing force and third biasing force generated in the second sealing member are controlled to be different from each other, so that the through-hole can be sealed without placing a sealing member in the engaging member, and rattle is less likely or unlikely to be generated. It is also possible to make the rack biasing device compact.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view showing a steering apparatus;
FIG. 2 is a cross-sectional view showing a rack biasing device, a gear mechanism consisting of a rack and a pinion, and its vicinity;
FIG. 3 is a cross-sectional view showing the rack biasing device;
FIG. 4 is a cross-sectional view showing a distributing portion; and
FIG. 5 is a cross-sectional view showing another example of a distributing portion.

### DETAILED DESCRIPTION OF EMBODIMENTS

A rack biasing device according to one embodiment of the invention will be described with reference to the drawings. It is to be understood that numerical values, shapes, materials, constituent elements, positional relationships and connecting conditions of the constituent elements, steps, and the order of the steps indicated in the following embodiment are merely exemplary, and are not intended to limit the scope of the invention. Constituent elements that are not mentioned in any one of the appended claims are described as arbitrary constituent elements with regard to the invention as defined in the claim in question. The drawings are schematic drawings in which emphasis, omission, and adjustment of proportions are performed so as to illustrate the invention, and the shapes, positional relationships, and proportions in the drawings may be different from the actual counterparts.

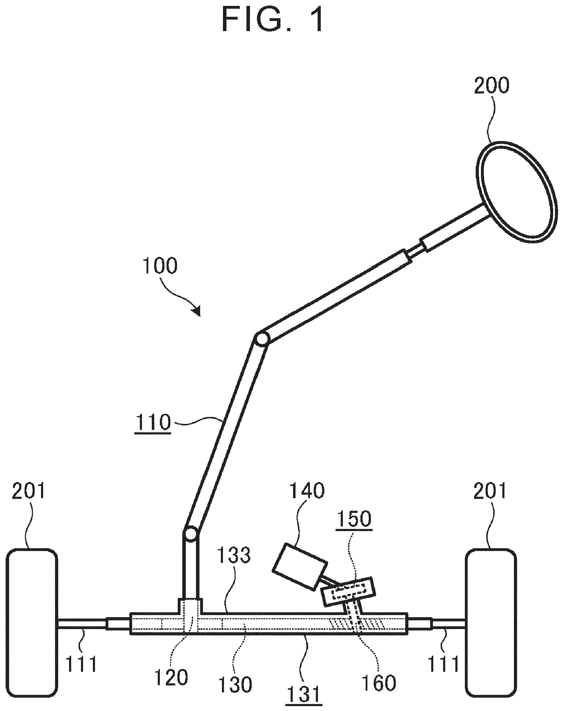

FIG. 1 shows a steering apparatus in the form of a gear mechanism including a rack biasing device. The steering apparatus 100 turns (steers) steerable vehicle wheels 201 including tires, based on rotation of a steering member 200, such as a steering wheel. In the case of this embodiment, the steering apparatus 100 is a so-called power steering apparatus including an assist device that generates force to assist in turning of the steerable wheels 201, according to steering torque generated by rotating the steering member 200. The steering apparatus 100 includes a steering shaft 110 having two or more shaft bodies coupled with universal joints, a steering pinion shaft 120 as one of pinion shafts connected to a distal end of the steering shaft 110, a rack shaft 130 that meshes with the steering pinion shaft 120, a rack housing 131, an assist motor 140, a speed reducer 150, a reducer housing 151, and an assist pinion shaft 160 as one of the pinion shafts.

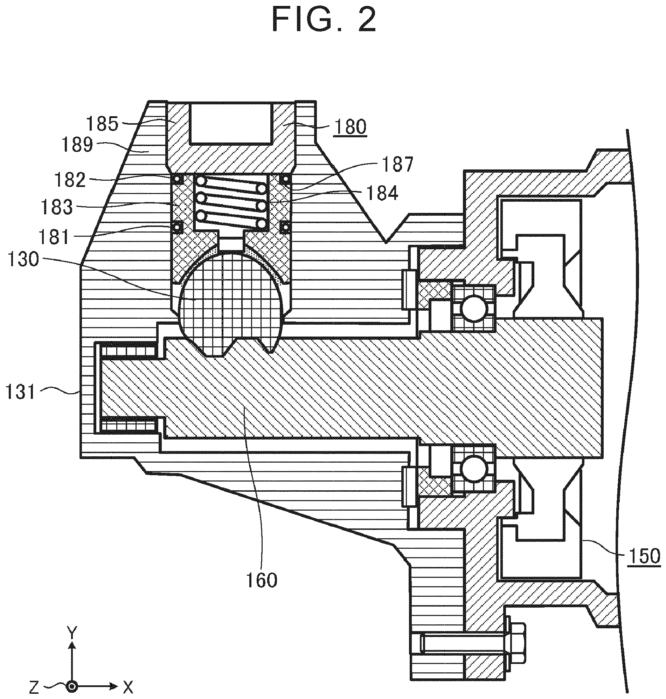

FIG. 2 is a cross-sectional view showing the rack biasing device, gear mechanism having a rack and a pinion, and its vicinity. As shown in FIG. 2, the steering apparatus 100 further includes the rack biasing device 180. The gear mechanism principally consists of a rack of the rack shaft 130, pinion of the assist pinion shaft 160, and the rack housing 131 that houses the rack and the pinion.

The rack shaft 130 is a rod-like member that has a generally circular shape in cross section, and extends in a rack-axis direction (Z-axis direction in FIG. 2), and a rack is provided in a part of the material of the rack shaft 130. Most of a middle portion of the rack shaft 130 is housed in the rack housing 131. Opposite end portions of the rack shaft 130 are connected to the steerable wheels 201 via tie rods 111 (see FIG. 1). In the case of this embodiment, the rack shaft 130 includes racks at positions corresponding to the steering pinion shaft 120 and the assist pinion shaft 160, respectively. As the steering member 200 rotates, rotation of the steering pinion shaft 120 is converted into reciprocating motion of the rack shaft 130, and additional force is further applied from the assist motor 140 to the rack shaft 130, to move the rack shaft 130 in the rack-axis direction, thereby to turn the steerable wheels 201.

The rack housing 131 is fixed to the vehicle, and serves to guide the rack shaft 130 housed therein, in the rack-axis direction, and most of the middle portion of the rack shaft 130 is housed in the rack housing 131. In the case of this embodiment, the rack housing 131 includes two portions, i.e., a portion into which the steering pinion shaft 120 that intersects and contacts the rack shaft 130 is inserted, and a portion into which the assist pinion shaft 160 that intersects and contacts the rack shaft 130 is inserted. A guide member 189 of the rack biasing device 180 is attached integrally to the rack housing 131, at a position that is perpendicular to the rack shaft 130 and is also perpendicular to the steering pinion shaft 120. The guide member 189 of the rack biasing device 180 is also attached integrally to the rack housing 131, at a position that is perpendicular to the rack shaft 130 and is also perpendicular to the assist pinion shaft 160. The rack housing 131 is formed of an aluminum alloy, for example.

The assist motor 140 is an electric drive source that generates assist torque to be added to torque from the steering member 200. The assist motor 140 may be installed with an electronic control unit (ECU) for an assist motor, and is operable to generate assist torque suitable for assist, based on information, such as the torque applied from the steering member 200, and the vehicle speed.

The speed reducer 150 reduces the rotational speed of an output shaft of the assist motor 140 by means of a gear, and generates torque that is inversely proportional to speed reduction, to the assist pinion shaft 160. In the case of this embodiment, the speed reducer 150 is a worm gear reducer.

The assist pinion shaft 160 is connected to a worm wheel 159 of the speed reducer 150, and generates assist force that is amplified by the speed reducer 150. In the case of this embodiment, the pinion provided on the assist pinion shaft 160 has a lead angle, and meshes with the rack of the rack shaft 130 at a given angle, to apply assist force to the rack shaft 130. In FIG. 2, the rack shaft 130 and the assist pinion shaft 160 are depicted as being perpendicular to each other, for the sake of explanation.

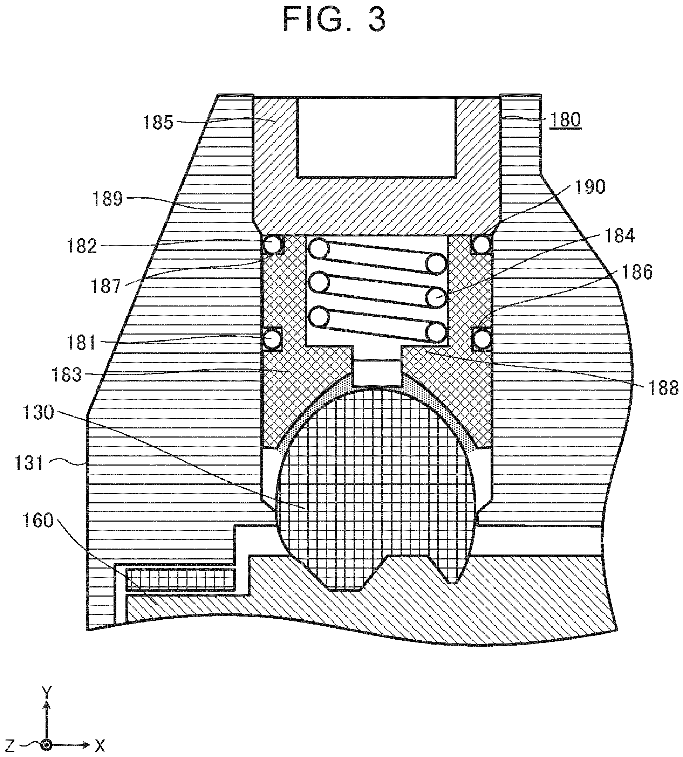

FIG. 3 is a cross-sectional view showing the rack biasing device. The rack biasing device 180 shown in FIG. 2 and FIG. 3 is disposed on a portion of a rack that meshes with the assist pinion shaft 160 as one of the pinion shafts. In the case of this embodiment, the rack biasing device 180 having the same mechanism is also disposed on a portion of a rack that meshes with the steering pinion shaft 120.

The rack biasing device 180 generates biasing force to press the rack shaft 130 against a pinion shaft, such as the assist pinion shaft 160, and includes a rack guide 183, guide member 189, first sealing member 181, second sealing member 182, biasing member 184, and engaging member 185.

The rack guide 183 moves along a movement axis (Y-axis direction in FIG. 3) that intersects the rack axis (Z-axis direction in FIG. 3) as the direction of movement of the rack shaft 130, and guides movement of the rack shaft 130 in the rack-axis direction. In the case of this embodiment, the movement axis of the rack guide 183 is perpendicular to the rack axis, and is perpendicular to the axis of rotation of the assist pinion shaft 160. The rack guide 183 directly or indirectly contacts with one side of the rack shaft 130 opposite to the rack, and presses the rack shaft 130 against the assist pinion shaft 160.

The shape of the rack guide 183, which is not limited to any particular shape, is a generally cylindrical shape in the case of this embodiment, and a groove 186, such as an annular O-ring groove that receives the first sealing member 181, is provided in an outer circumferential surface of the rack guide 183. Also, a distributing portion 187 is provided at the periphery of one end portion of the rack guide 183 which faces the engaging member 185, on the side opposite to the groove 186. The groove 186 is located in the vicinity of a middle position of the rack guide 183 as viewed in the direction of the movement axis, or at a position closer to the rack shaft 130 than the middle position. The distributing portion 187 will be described later.

The other end portion of the rack guide 183 which faces the rack shaft 130 is formed along the shape of the outer circumferential surface of the rack shaft 130, and has a flange portion 188 that protrudes inward, in abutting contact with the biasing member 184. The inner periphery of the rack guide 183 has a diameter that permits the biasing member 184 to be inserted and fitted in the rack guide 183 with a clearance.

The guide member 189 houses the rack guide 183, and guides movement of the rack guide 183 housed therein, in the direction of the movement axis. While the shape of the guide member 189 is not limited to any particular shape, the guide member 189 includes a through-hole that guides the rack guide 183. In the case of this embodiment, the outer circumferential surface of the rack guide 183 has a cylindrical shape; therefore, a cylindrical through-hole is provided in the guide member 189. The guide member 189 is attached integrally to the rack housing 131, and a female screw (not shown) as an engaging portion that engages with the engaging member 185 is provided in an opening of the guide member 189 opposite to the rack shaft 130.

The biasing member 184 is incorporated in the guide member 189, and is disposed on one side of the rack guide 183 opposite to the rack shaft 130, to generate force that presses the rack shaft 130 against the assist pinion shaft 160, via the rack guide 183. The type of the biasing member 184 is not limited to any particular type, but a coil spring is employed as the biasing member 184 in the case of this embodiment. The biasing member 184 is received in the rack guide 183, such that one end portion abuts against the flange portion 188 of the rack guide 183, and the other end portion abuts against the engaging member 185.

The engaging member 185 is disposed on one side of the rack guide 183 opposite to the rack shaft 130, and causes the biasing member 184 to generate biasing force to push the rack shaft 130 toward the assist pinion shaft 160 when it engages with an engaging portion of the guide member 189. The manner of engaging the engaging member 185 with the guide member 189 is not particularly limited. In the case of this embodiment, a male screw is provided on an outer circumferential surface of the engaging member 185, and is brought into meshing engagement with the female screw provided on the inner periphery of an end portion of the guide member 189 opposite to the rack shaft 130, so that the engaging member 185 engages with the guide member 189.

A surface of the engaging member 185 which faces the rack guide 183 is a circular plane perpendicular to the movement axis of the rack guide 183, and its outer peripheral portion provides an annular contact portion 190 that contacts the second sealing member 182. Also, a central portion of the surface of the engaging member 185 which faces the rack guide 183 is in contact with the biasing member 184.

The first sealing member 181, which is an annular elastic member, is disposed to surround the outer circumferential surface of the rack guide 183, and is sandwiched between the guide member 189 and the rack guide 183, to generate first biasing force. The first sealing member 181 provide a seal between the guide member 189 and the rack guide 183, and also permits movement of the rack guide 183 relative to the guide member 189 in the direction of the movement axis. The type of the first sealing member 181 is not particularly limited, but a so-called O ring is used in the case of this embodiment. Also, the first sealing member 181 is placed in the groove 186 provided in the outer circumferential surface of the rack guide 183.

The second sealing member 182, which is an annular elastic member, is disposed in the end portion of the rack guide 183 which faces the engaging member 185, on the side opposite to the first sealing member 181, so as to surround the outer circumferential surface of the rack guide 183, and is sandwiched between the guide member 189 and the rack guide 183 to generate second biasing force, and provide a seal between the guide member 189 and the rack guide 183. Also, a part of the second sealing member 182 protrudes from the rack guide 183 in the direction of movement, and is sandwiched between the engaging member 185 and the rack guide 183, to abut against the engaging member 185 in a condition where third biasing force is generated. The second sealing member 182 provides a seal between the guide member 189 and the rack guide 183, and also permits movement of the rack guide 183 relative to the guide member 189 in the direction of the movement axis. The type of the second sealing member 182 is not particularly limited, but an O-ring that is of the same type and the same shape as the first sealing member 181 is used as the second sealing member 182 in the case of this embodiment. This arrangement can avoid a mistake in mounting of the first sealing member 181 and the second sealing member 182. The second sealing member 182 is placed in the distributing portion 187 provided in the outer peripheral portion of the end face of the rack guide 183 which faces the engaging member 185.

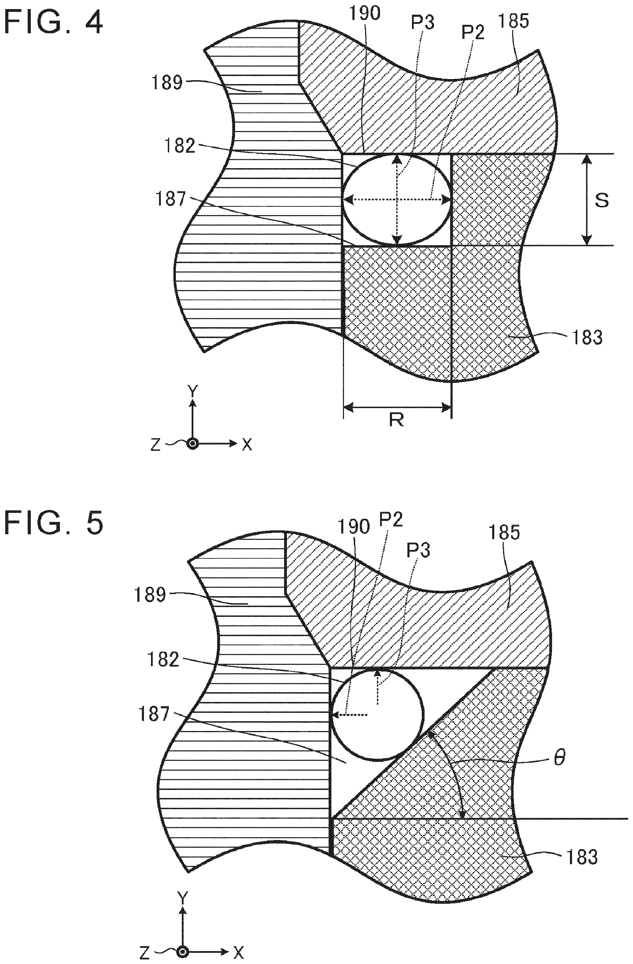

FIG. 4 is a cross-sectional view showing the distributing portion. As shown in FIG. 4, the distributing portion 187 is an annular portion that causes the second sealing member 182 to generate second biasing force P2 between the guide member 189 and the rack guide 183, and generate third biasing force P3 different from the second biasing force P2, between the engaging member 185 and the rack guide 183.

In the case of this embodiment, the distributing portion 187 is provided at the periphery of the end portion of the rack guide 183 which faces the engaging member 185, and is in the form of a cutout that is rectangular in cross-section and is open to the engaging member 185 and the guide member 189. Also, the length S of the distributing portion 187 as measured in the movement-axis direction (Y-axis direction in FIG. 4) is set to be shorter than the length R in a radial direction, so that the third biasing force P3 is stronger than the second biasing force P2, in a steady state in which the rack shaft 130 and the rack guide 183 stand still relative to the guide member 189, and the biasing force of the biasing member 184 is constant.

The rack biasing device 180 according to the above embodiment makes it possible to differ the biasing force of the second sealing member 182 between the radial direction and the movement-axis direction, by adjusting the length R of the distributing portion 187 in the radial direction, and the length S in the movement-axis direction. With this arrangement, even where the first sealing member 181 and second sealing member 182 having the same material and the same shape are employed, it is possible to control sealing properties between the guide member 189 and the rack guide 183, and curb rattle or noise made by the rack guide 183 and the engaging member 185, by adjusting the aspect ratio of the distributing portion 187 as needed.

In particular, it is possible to make the third biasing force P3 of the second sealing member 182 greater than the second biasing force P2, by adjusting the length R of the distributing portion 187 in the radial direction and the length S thereof in the movement-axis direction so that R is larger than S. With this arrangement, even where the first sealing member 181 and second sealing member 182 having the same material and the same shape are employed, it is possible to ensure sufficient sealing performance between the guide member 189 and the rack guide 183, while curbing rattle or noise made by the rack guide 183 and the engaging member 185.

Since it is possible to ensure high sealing performance by use of the first sealing member 181 and second sealing member 182 that contact the rack guide 183, there is no need to place a sealing member in the engaging member 185. As a result, the length of the engaging member 185 as measured in the movement-axis direction can be reduced, and the length of the guide member 189 can also be reduced accordingly. It follows that the amount of protrusion of the guide member 189 from the rack housing 131 can be reduced, and the steering apparatus 100 can be made compact.

The present invention is not limited to the above embodiment. For example, another embodiment of the invention may be provided by arbitrarily combining the constituent elements described in this specification, or excluding some of the constituent elements. Also, this invention includes modified examples obtained by making various modifications conceived by those skilled in the art, to the above embodiment, without departing from the principle of the invention, namely, the meanings indicated by the words contained in the appended claims.

For example, the distributing portion 187 may be in a tapered form, as shown in FIG. 5, such that the diameter of the distributing portion 187 is gradually reduced toward the engaging member 185, in an end portion of the rack guide 183 which faces the engaging member 185. In this case, the angle of gradient θ of the distributing portion 187 is set to be less than 45°, so that the third biasing force P3 (component force normally applied to the engaging member 185) is stronger than the second biasing force P2 (component force normally applied to the guide member 189), in a steady state.

The engaging member 185 and the guide member 189 are not necessarily engaged with each other through screwing, but may be engaged by pressing the engaging member 185 into the guide member 189.

The steering apparatus 100 does not require the steering member 200 and the rack shaft 130 to be mechanically connected to each other, but may be a so-called SBW (Steer-by-Wire System) in which the angle of rotation of the steering member 200, etc. is read by a sensor, etc., and the rack shaft 130 is operated by use of a pinion shaft, based on a signal of the sensor, etc., to steer the steerable wheels 201.

The rack biasing device 180 is not limitedly applied to the steering apparatus 100, but may be applied to any apparatus provided that it includes a gear mechanism consisting of a rack and a pinion.

This invention can be utilized for a gear mechanism in which a rack and a pinion mesh with each other.

## Claims

1. A rack biasing device (180) mounted on a gear mechanism including a pinion shaft (160) at least a part of which comprises a pinion, a rack shaft (130) at least a part of which comprises a rack that meshes with the pinion, and a rack housing (131) in which the rack shaft is housed, the rack biasing device (180) being operable to generate biasing force that presses the rack shaft (130) against the pinion shaft (160), the rack biasing device (180) **characterized by** comprising:
a rack guide (183) configured to move along a movement axis that intersects a rack axis as a direction of movement of the rack shaft (130), and guide movement of the rack shaft (130);
a cylindrical guide member (189) attached to the rack housing (131), and configured to house the rack guide (183) and guide movement of the rack guide (183);
an annular first sealing member (181) configured to generate first biasing force between the guide member (189) and the rack guide (183), and provide a seal between the guide member (189) and the rack guide (183);
a biasing member (184) that is housed in the guide member (189), and is disposed on one side of the rack guide (183) opposite to the rack shaft (130);
an engaging member (185) disposed on one side of the rack guide (183) opposite to the rack shaft (130), and configured to engage with the guide member (189) to cause the biasing member (184) to generate biasing force to push the rack shaft (130) toward the pinion shaft (160); and
a second sealing member (182) disposed to be closer to the engaging member (185) than the first sealing member (181), and configured to provide a seal between the guide member (189) and the rack guide (183), and abut against the engaging member (185), **characterized in that**
the rack guide (183) has an annular distributing portion (187) in an end portion that faces the engaging member (185), and the distributing portion (187) is configured to cause the second sealing member (182) to generate second biasing force between the guide member (189) and the rack guide (183), and generate third biasing force different from the second biasing force, between the engaging member (185) and the rack guide (183).

2. The rack biasing device (180) according to claim 1, **characterized in that** the third biasing force is stronger than the second biasing force, in a steady state in which the rack shaft (130) and the rack guide (183) stand still, and the biasing force of the biasing member (184) is constant.

3. The rack biasing device (180) according to claim 1 or 2, **characterized in that** the distributing portion (187) is open to the engaging member (185) and the guide member (189), and comprises a cutout that is rectangular in cross-section.

4. The rack biasing device (180) according to claim 1 or 2, **characterized in that** the distributing portion (187) is in a tapered form in which a diameter of the distributing portion (187) is gradually reduced toward the engaging member (185).
